# FASCICULE DE BREVET EUROPEEN

(11) **EP 1 908 180 B1**
(45) Date de publication et mention de la délivrance du brevet: **24.04.2013**
(21) Numéro de dépôt: 06777594.0
(22) Date de dépôt: 05.07.2006
(51) Int. Cl.: H04B 1/713

(54) **PROCEDE ET DISPOSITIF DE DE-HOPPING AVEUGLE**
VERFAHREN UND EINRICHTUNG ZUM BLIND-DEHOPPING
METHOD AND DEVICE FOR BLIND DEHOPPING

(30) Priorité: 05.07.2005 FR 0507142
(43) Date de publication de la demande: 09.04.2008
(73) Titulaire: Thales, 92200 Neuilly-Sur-Seine (FR)
(72) Inventeur: BRUNET, Daniel, F-49230 Vauchretien (FR); HOUX, Hervé, F-49000 Angers (FR); GUIGNARD, Thierry, F-49300 Choloet (FR)
(74) Mandataire: Dudouit, Isabelle
(86) Numéro de dépôt international: PCT/EP2006/063911
(87) Numéro de publication internationale: WO 2007/003652

(56) Documents cités:
- US-A1- 2004 137 849
- US-B1- 6 188 715

## Description

L'invention concerne un procédé et un dispositif permettant notamment d'intercepter et de caractériser des signaux dans des réseaux à saut de fréquence.

L'analyse technique des données transmises pendant une communication à saut de fréquence nécessite la mise en oeuvre d'un traitement de dé-entrelacement (plus connu dans le domaine technique sous le terme anglo-saxon dé-hopping) permettant le chaînage des données transmises sur chaque palier.

En général, le principe du dispositif et du procédé permettant le dé entrelacement est le suivant :
● Plusieurs voies élémentaires 40 MHz « esclaves » sont associées en parallèle avec une voie 40 MHz « maître »,
● Des algorithmes de suivi associés à des algorithmes de traitement du signal sont implantés dans des circuits programmables adaptés, par exemple de type FPGA (Field Programable Gate Array),
● Une structure d'accueil multivoies permet la gestion des voies élémentaires.

Les problèmes techniques à résoudre sont, notamment :
● L'interception et la caractérisation des émissions à saut de fréquence,
● Le suivi en temps réel des paliers à saut de fréquence de la communication concernée,
● La reconstitution du train de données,
● Le décodage des informations transmises.

Le principe de détection antérieur des réseaux à évasion de fréquence ou EVF est basé sur la mise en parallèle de détecteurs d'énergie ou radiomètres élémentaires bande étroite. Le document US 2004/137849 divulgue un example de l'art antérieur.

L'invention repose sur une nouvelle approche permettant le traitement en temps réel des signaux à caractériser dans des réseaux à saut de fréquence.

L'invention concerne notamment un procédé pour caractériser en temps réel des réseaux à saut de fréquence dans lequel on convertit le signal à caractériser en un signal numérique et on détermine les caractéristiques fréquentielles du signal, caractérisé en ce qu'il comporte au moins les étapes suivantes :
● on recherche un saut de fréquence pour se synchroniser sur le début d'émission,
● on suit la fréquence et on recherche la fréquence centrale Fc du canal d'émission souhaité,
● on applique un retard sur les échantillons numérisés pendant la phase de suivi,
● on détermine les échantillons correspondant au palier du signal à partir des échantillons retardés et de la fréquence centrale trouvée.

L'invention concerne aussi un dispositif pour caractériser en temps réel des réseaux à saut de fréquence comprenant un convertisseur du signal à caractériser en signal numérique caractérisé en ce qu'il comporte en combinaison au moins les éléments suivants :
● un dispositif adapté à introduire un retard sur le signal reçu,
● un dispositif de suivi et de détermination des caractéristiques fréquentielles du signal,
● un dispositif de dé-entrelacement, recevant le signal retardé et la fréquence centrale trouvée afin de déterminer les caractéristiques du réseau à saut de fréquence recherché.

L'invention présente notamment les avantages suivants. Les données numériques transmises par paquets sur les paliers EVF (modulations à saut de fréquence) peuvent être chaînées sans connaître la loi de fréquence de l'EVF.

Dans le contexte de communications avec plusieurs réseaux EVF, le dispositif selon l'invention permet notamment de suivre et de chaîner des données transmises sur les paliers d'une EVF et cela, sur la totalité de la bande très haute fréquence (VHF) tactique (configuration 2 fois 40 MHz par exemple) ou ultra haute fréquence (UHF) Aéro (configuration 5 fois 40 MHz). L'architecture du dispositif selon l'invention est modulaire.

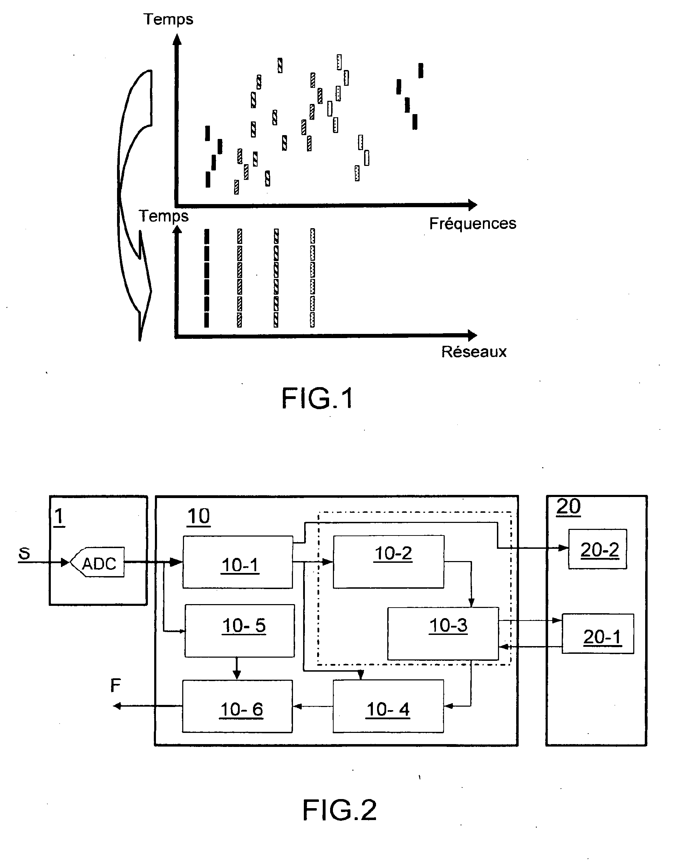

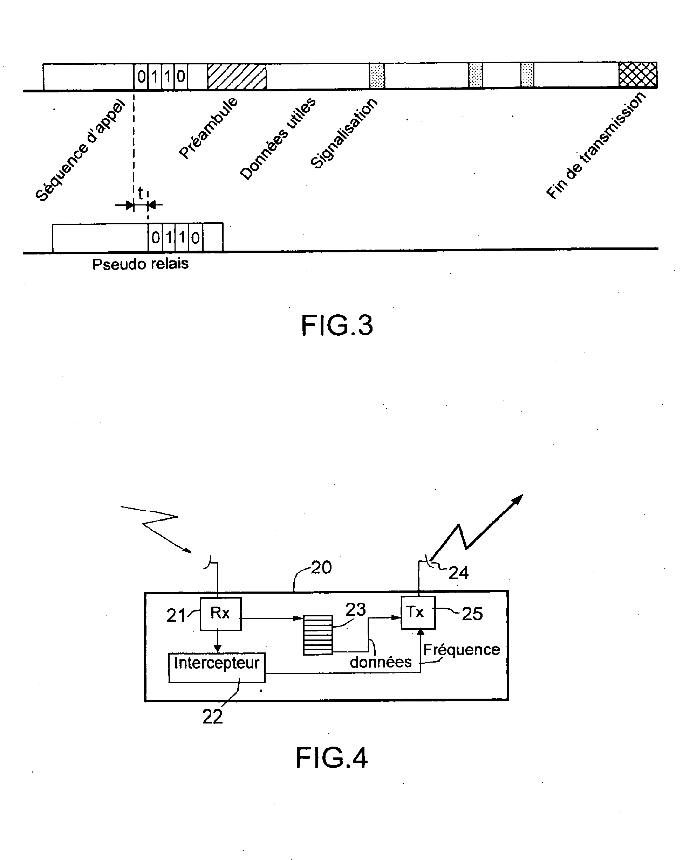

D'autres caractéristiques et avantages de la présente invention apparaîtront mieux à la lecture de la description d'un exemple détaillé donné à titre illustratif et nullement limitatif annexé des figures qui représentent :
● La figure 1 le principe de traitement du dé entrelacement,
● La figure 2 un exemple de modules IP FPGA implantés dans une voie de réception pour permettre le dé-hopping des réseaux à saut de fréquence sur 40 MHz,
● La figure 3 le principe d'une modification de signal par un dispositif pseudo relais, et
● La figure 4 un dispositif pseudo-relais permettant la modification de signaux.

Afin de mieux faire comprendre l'invention, l'exemple est donné dans le cas d'une structure software radio. Les exemples qui suivent sont donnés à titre indicatif et nullement limitatif dans le cadre d'une implémentation de l'invention sur un composant programmable tel qu'un FPGA (en anglo-saxon Field Programmable Gate Array).

Dans ce cas, le procédé comporte une étape de chargement des images FPGA « traitements numériques temps réel » et d'un logiciel de « supervision » pour configurer les liens entre les différents composants, selon des étapes connues de l'Homme du métier.

Les algorithmes décrits sont valables pour des applications en mode mono et multivoies. En mode multivoies, une partie des algorithmes peut être simplement déportée dans une fonction maître.
La figure 1 représente dans un diagramme temps-fréquences le principe de traitement du dé-entrelacement ou dé-hopping.
La figure 2 illustre un exemple de modules FPGA implantés dans chaque voie d'un système de communication pour permettre le dé-hopping des réseaux à saut de fréquence, par exemple sur 40MHz.

Le principe du dé-entrelaceur aveugle selon l'invention consiste notamment à :
● Mettre en parallèle plusieurs voies élémentaires de 40 MHz, sur le principe d'un maître et de x voies esclaves,
● Appliquer des traitements numériques du signal en temps réel permettant le suivi des réseaux à saut de fréquence ou EVF concernées et la génération d'un flux d'échantillons en bande de base,
● Appliquer des traitements d'analyse technique sur le flux d'échantillons pour chaîner les données numériques transmises sur les paliers EVF (paliers du réseau à saut de fréquence).

Le dispositif comporte notamment un dispositif de conversion 1 des signaux S reçus sur le récepteur, les signaux convertis sont ensuite transmis à un circuit programmable 10 de type FPGA et un processeur maître 20.

Le bloc circuit programmable, FPGA comporte notamment :
10-1 Un bloc Rx regroupant notamment plusieurs fonctions : des fonctions de transpositions numériques, des fonctions de transformation de Fourier rapide, des fonctions de mise en forme-optimisation,
10-2 Un bloc extracteur.
Ce module regroupe notamment une fonction d'extraction de début et de fin de palier des réseaux à saut de fréquence EVF. Cette fonction permet notamment au bloc maître 20-2 de caractériser le spectre numérisé pour en extraire les caractéristiques des différentes EVF présentes dans le spectre.

Dans l'exemple de réalisation, les caractéristiques pour chaque EVF trouvée sont, par exemple, la durée palier HT et la période de l'EVF HCT.
10-3 Un bloc algorithme de gestion
Ce module permet notamment d'aiguiller les signaux selon le mode mono ou multivoie. Il comprend, par exemple, p voies de réception de 40 MHz. Dans le cas du mode mono voie, le bloc algorithme de gestion dialogue directement avec le bloc supervision 20-1 du maître.

Dans le cas du mode multivoies, p voies, le gestionnaire dialogue avec le maître FPGA. Ce dernier regroupe l'ensemble des informations en provenance des Management Bloc Algorithm des p voies et dialogue avec le bloc de supervision 20-1 du maître.
10-4 Un bloc algorithme de suivi
Ce module regroupe notamment des fonctions de détection de saut de fréquence, et de suivi de saut de fréquence.
Il recherche l'EVF souhaitée pour se resynchroniser sur le début de palier de celle-ci. Il a notamment pour fonction de trouver la fréquence centrale du canal d'émission de l'EVF recherchée.
10-5 Un bloc de retard de ligne
Ce module comporte notamment les fonctions de Ligne à Retard. Il mémorise les échantillons numérisés pendant la phase de suivi initiale.
10-6 Un bloc algorithme de-entrelaceur ou de-hopper
Ce module regroupe notamment des fonctions de conversion numérique descendante. Il reçoit en entrée la fréquence centrale Fc du canal d'émission trouvée par le bloc suiveur et les échantillons retardés.
En sortie du module, on obtient les échantillons correspondant au palier EVF du canal d'émission.

Le flux d'échantillons F obtenus au niveau du dé-entrelaceur est ensuite transmis à différents dispositifs de traitement et d'analyse connus de l'Homme du métier ayant notamment pour fonction de reconstituer le train de données transmis pendant la communication EVF.

Le procédé selon l'invention fonctionne par exemple de la manière suivante : le signal RF est tout d'abord converti en signal numérique.

Une première phase caractérise le spectre du signal numérique pour en extraire les signaux radio fréquence RF soit à fréquence fixe, soit à évasion de fréquence. Le spectre du signal numérique est réalisé par le bloc 10-1.
Les caractéristiques des signaux RF sont ainsi définies : la valeur fréquentielle de la porteuse pour une fréquence fixe, la durée de paliers et la période des paliers pour un signal RF à évasion de fréquence. Cette phase de caractérisation est réalisée, par exemple, dans le circuit programmable FPGA par l'algorithme du bloc, 10-1, et du bloc d'extraction, 10-2, puis dans le processeur supervision, 10-7 .

Après la phase de caractérisation, la phase de dé-entrelacement est lancée, 10-6.

A partir du spectre issu du bloc 10-1 et des informations de durée et de période de palier transmises de la supervision vers le FPGA, l'algorithme de suivi (algorithme de suivi 10-4) se synchronise sur chaque début de palier du signal RF à évasion de fréquence.

Durant ces synchronisations, le signal numérique issu du bloc de conversion est mémorisé dans une ligne à retard, 10-5. Une fois la synchronisation terminée, le bloc 10-6 contenant l'algorithme de dé entrelacement reçoit du bloc de suivi, 10-4, la valeur de la fréquence centrale Fc et, de la ligne à retard le signal numérique Fn. L'algorithme de dé-entrelacement « Dé-Hopping » réalise un filtrage sur le canal du signal RF à évasion de fréquence pour un enregistrement. La ligne à retard permet de remonter le temps perdu par la synchronisation.

Selon un mode de réalisation, l'invention comporte une fonction (brouilleur par pseudo-relais) permettant la modification des paliers d'une communication. Cette fonction permet notamment de modifier les synchronisations de réseaux dans un contexte de brouillage de zone avec plusieurs communications en fréquence fixe numérisée (FN) ou en évasion de fréquence (EVF).

Dans un système de communications, la station 20 permettant la modification du signal agit comme un pseudo-relais entre une station maître et un ou plusieurs subordonnés. Pour établir les communications, les équipements à saut de fréquence doivent émettre des séquences de synchronisation et les communications de données en fréquence numérisée nécessitent des protocoles de communication.

Au cours du procédé :
✔ On intercepte les appels synchronisants pendant une phase de synchronisation initiale ou de re synchronisation des communications à saut de fréquence,
✔ On retransmet avec un retard t uniquement la phase de synchronisation.

A réception (récepteur 21) de cette pseudo phase de synchronisation émise par le brouilleur pendant la phase de re synchronisation du réseau EVF, le maître et le ou les subordonnés du réseau ne peuvent se synchroniser.

On a représenté sur la figure 3 un synoptique d'une architecture permettant de mettre en oeuvre cette fonction.

L'architecture fonctionnelle du dispositif est constituée par exemple :
● D'un intercepteur 22 rapide multi voies associé à une mémoire tampon 23 et à une antenne directive 24,
● D'un émetteur de puissance 25 associé à l'antenne directive.

Le dispositif comporte notamment :
✔ Un module de réception, 21, permettant de transposer le spectre radio électrique en bande FI 70 MHz pour être numérisé sur une largeur de 40 MHz,
✔ Un traitement numérique, 22, d'acquisition du signal qui réalise une transformation de Fourrier rapide FFT avec synchronisation sur les paliers ou les tops de synchronisation (en anglo-saxon bursts), puis mémorise les phases de synchronisation numérisées,
✔ Un retard programmable t est apporté aux phases de synchronisation avant ré émission,
✔ Une transposition de fréquence du signal retardé (exécutée par l'élément 25) permettant notamment de transposer le signal dans le spectre radio électrique,
✔ Un amplificateur (intégré dans le module 25) adapté à amplifier le signal de brouillage.

Les différentes phases peuvent se résumer dans le tableau ci-après

| Phases | Actions | Conséquences |
|---|---|---|
| 1 | Brouillage de la zone par brouillage de barrage | Les équipements demandent une re synchronisation |
| 2 | A l'arrivée de l'appel synchronisant, le pseudo relais retransmet la séquence d'appel | Les équipements des réseaux visés commencent à se synchroniser |
| 3 | On stoppe le pseudo relais à la fin de la séquence d'appel | Les équipements des réseaux cibles reçoivent des données utiles mais décalées La communication est rejetée |

## Revendications

1. Procédé pour caractériser en temps réel des réseaux à saut de fréquence dans lequel on convertit le signal à caractériser en un signal numérique et on détermine les caractéristiques fréquentielles du signal, comportant au moins les étapes suivantes :
● on recherche un saut de fréquence pour se synchroniser sur le début d'émission,
● on suit la fréquence et on recherche la fréquence centrale Fc du canal d'émission souhaité,
● on applique un retard sur les échantillons numérisés pendant la phase de suivi,
● on détermine les échantillons correspondant au palier du signal à partir des échantillons retardés et de la fréquence centrale trouvée.

2. Procédé selon la revendication 1 **caractérisé en ce que** l'on caractérise la durée et la période du palier dans le cas d'une évasion à saut de fréquence (EVF).

3. Procédé selon la revendication 1 **caractérisé en ce que** l'on utilise un circuit programmable de type FPGA.

4. Procédé selon revendication 1 caractérisé en ce la fréquence est égale à 40 MHz.

5. Procédé selon la revendication 1 **caractérisé en ce qu'**il comporte une étape où l'on modifie la synchronisation des réseaux dans un contexte où plusieurs communications existent et **en ce qu'**il comporte au moins les étapes suivantes :
● on intercepte les appels synchronisants, pendant une phase de synchronisation initiale ou une phase de re synchronisation,
● on retransmet avec un retard t la phase de re synchronisation.

6. Dispositif pour caractériser en temps réel des réseaux à saut de fréquence comprenant un convertisseur analogique-numérique adapté pour convertir le signal à caractériser en signal numérique et comportant en combinaison au moins les éléments suivants :
● un dispositif (10-5) adapté à introduire un retard sur le signal reçu,
● un dispositif (10-2, 20-2) de détermination des caractéristiques fréquentielles du signal,
● un dispositif de dé entrelacement, (10-6) recevant le signal retardé et la fréquence centrale afin de déterminer les caractéristiques du réseau à saut de fréquence recherché.

## Claims

1. Method for **characterising in** real time frequency hopping networks in which the signal to be characterised is converted into a digital signal and the frequency characteristics of the signal are determined, comprising at least the following steps:
● frequency hopping is sought in order to be synchronised at the beginning of transmission,
● the frequency is tracked and the central frequency Fc of the desired transmission channel is sought,
● a delay is applied to the digitized samples during the tracking phase,
● the samples which correspond to the level of the signal from the delayed samples and the central frequency found are determined.

2. Method according to claim 1, **characterised in that** the duration and the period of the level are **characterised in** the case of frequency hopping (EVF).

3. Method according to claim 1, **characterised in that** a programmable circuit of the FPGA type is used.

4. Method according to claim 1, **characterised in that** the frequency is 40 MHz.

5. Method according to claim 1, **characterised in that** it comprises a step in which the synchronisation of the networks is modified in a context where a plurality of communications exist and **in that** it comprises at least the following steps:
● the synchronising calls are intercepted during a phase of initial synchronisation or a phase of resynchronisation,
● the resynchronisation phase is retransmitted with a delay t.

6. Device for **characterising in** real time frequency hopping networks comprising an analogue/digital converter which is adapted for converting the signal to be characterised into a digital signal and comprising at least the following elements together:
● a device (10-5) which is adapted for introducing a delay in the signal received,
● a device (10-2, 20-2) for determining the frequency characteristics of the signal,
● a deinterlacing device (10-6) which receives the delayed signal and the central frequency in order to determine the characteristics of the sought frequency hopping network.

## Patentansprüche

1. Verfahren zur Echtzeit-Kennzeichnung von Netzen mit Frequenzsprung, wobei das zu kennzeichnende Signal in ein digitales Signal umgewandelt wird und die Frequenzmerkmale des Signals bestimmt werden, das mindestens die folgenden Schritte aufweist:
• Suche eines Frequenzsprungs zur Synchronisierung auf dem Sendebeginn,
• Verfolgen der Frequenz und Suche der zentralen Frequenz Fc des gewünschten Sendekanals,
• Anwendung einer Verzögerung auf die digitalisierten Abtastwerte während der Verfolgungsphase,
• Bestimmung der Abtastwerte, die dem Schwellenwert des Signals entsprechen, ausgehend von den verzögerten Abtastwerten und der gefundenen zentralen Frequenz.

2. Verfahren nach Anspruch 1, **dadurch gekennzeichnet, dass** im Fall eines Frequenzsprungs (EVF) die Dauer und die Periode des Schwellenwerts gekennzeichnet werden.

3. Verfahren nach Anspruch 1, **dadurch gekennzeichnet, dass** ein programmierbarer Kreis vom Typ FPGA verwendet wird.

4. Verfahren nach Anspruch 1, **dadurch gekennzeichnet, dass** die Frequenz gleich 40 MHz ist.

5. Verfahren nach Anspruch 1, **dadurch gekennzeichnet, dass** es einen Schritt aufweist, bei dem die Synchronisierung der Netze in einem Kontext mit mehreren Kommunikationen geändert wird und dass es mindestens die folgenden Schritte umfasst:
• Abfangen der synchronisierenden Anrufe während einer anfänglichen Synchronisierungsphase oder einer erneuten Synchronisierungsphase,
• Weiterleitung der erneuten Synchronisierungsphase mit einer Verzögerung t.

6. Vorrichtung zur Echtzeit-Kennzeichnung von Frequenzsprungnetzen, die einen Analog-Digital-Konverter aufweist, der geeignet ist, um das zu kennzeichnende Signal in ein digitales Signal umzuwandeln und in Kombination mindestens die folgenden Elemente aufweist:
• eine Vorrichtung (10-5), die für das Einfügen einer Verzögerung auf das erhaltene Signal geeignet ist,
• eine Vorrichtung (10-2, 20-2) zur Bestimmung der Frequenzmerkmale des Signals,
• eine Vorrichtung zur Auflösung der Verschachtelung (10-6), die das verzögerte Signal empfängt und die zentrale Frequenz empfängt, um die Merkmale des gesuchten Frequenzsprungnetzes zu bestimmen.
